# EUROPÄISCHE PATENTSCHRIFT

(11) **EP 2 805 380 B1**
(45) Veröffentlichungstag und Bekanntmachung des Hinweises auf die Patenterteilung: **27.07.2016**
(21) Anmeldenummer: 13701007.0
(22) Anmeldetag: 16.01.2013
(51) Int. Cl.: H01R 12/70

(54) **ANSCHLUSSELEMENT**
CONNECTION ELEMENT
ELÉMENT DE RACCORDEMENT

(30) Priorität: 20.01.2012 EP 12151889
(43) Veröffentlichungstag der Anmeldung: 26.11.2014
(73) Patentinhaber: Saint-Gobain Glass France, 92400 Courbevoie (FR)
(72) Erfinder: TIMMERMANN, Alwin, 50933 Köln (DE)
(74) Vertreter: Gebauer, Dieter Edmund
(86) Internationale Anmeldenummer: PCT/EP2013/050692
(87) Internationale Veröffentlichungsnummer: WO 2013/107749

(56) Entgegenhaltungen:
- EP-A1- 2 299 544
- EP-A2- 0 657 970
- DE-U1- 20 215 634
- JP-A- 2004 189 023
- US-A- 5 041 005
- US-A- 5 366 390
- US-A- 6 050 853

## Beschreibung

Die Erfindung betrifft eine Anschlussanordnung zur Kontaktierung elektrisch leitfähiger Strukturen auf einem Substrat und insbesondere auf einer Heizfolie oder einer Fahrzeugscheibe, ein Anschlusselement der Anschlussanordnung und ein wirtschaftliches Verfahren zur Herstellung der Anschlussanordnung.

Moderne Fahrzeugscheiben weisen oftmals feine, optisch kaum wahrnehmbare, elektrisch leitfähige Strukturen auf, die beispielsweise als Heizleiter, Anntennenleiter oder Alarmschleife dienen. Die elektrisch leitfähigen Strukturen sind üblicherweise über angelötete Metallbügel elektrisch kontaktiert, wie aus EP1488972A1 und DE202008015441 U1 bekannt ist.

Alternativ werden entsprechende elektrisch leitfähige Strukturen auf einer dünnen Trägerfolie aufgebracht und die Trägerfolie mit der Fahrzeugscheibe verklebt, wie aus DE102009026021 A1 bekannt ist.

Aufgrund unterschiedlicher thermischer Ausdehnungskoeffizienten der verwendeten Materialien treten mechanische Spannungen bei der Herstellung und im Betrieb auf, welche die Scheiben belasten und den Bruch der Scheibe hervorrufen können. Da die elektrisch leitfähigen Strukturen sehr dünn sind, ist die Kontaktstelle zum Metallbügel wenig stabil und anfällig für Scherkräfte. Des Weiteren sind Adaptersysteme notwendig, um die Anschlüsse an den Metallbügeln in ein für die Bordelektronik gebräuchliches Steckerformat zu überführen.

Die deutsche Gebrauchsmusterschrift DE 202 15 634 U1 zeigt eine Anschlussanordnung und Anschlusselement nach dem Oberbegriff von Patentanspruch 1. Das US-Patent Nr. 5,041,005 zeigt eine schräg angeordnete Steckeraufnahme, bei der ein Stecker schräg angesetzt und durch eine hinten absenkende Bewegung eingefügt werden kann.

Demgegenüber besteht die Aufgabe der vorliegenden Erfindung darin, eine verbesserte Anschlussanordnung und ein verbessertes Anschlusselement bereitzustellen, das eine einfache und dauerhafte elektrische Kontaktierung von dünnen elektrisch leitfähigen Strukturen auf einem Substrat ermöglicht. Eine weitere Aufgabe besteht darin, ein einfacheres und wirtschaftlicheres Verfahren zur Herstellung einer erfindungsgemäßen Anschlussanordnung bereitzustellen. Diese und weitere Aufgaben werden nach dem Vorschlag der Erfindung durch die Merkmale der nebengeordneten Patentansprüche gelöst. Vorteilhafte Ausgestaltungen der Erfindung sind durch die Merkmale der Unteransprüche angegeben.

Die Erfindung betrifft eine Anschlussanordnung, mindestens umfassend:
- ein Substrat mit mindesten zwei elektrisch leitfähigen Strukturen,
- ein Gehäuse, das auf der Unterseite mit einer Klebebefestigung mit dem Substrat verbunden ist,
- das Gehäuse, eine Steckeraufnahme mit mindestens zwei Steckkontakten aufweist,
- die Steckkontakte über elektrische Leiter mit mindestens zwei Kontaktfüßen verbunden sind und
- die Kontaktfüße mit den elektrisch leitfähigen Strukturen elektrisch leitend verbunden sind,
wobei der Winkel α zwischen der Steckrichtung der Steckeraufnahme und der Unterseite des Gehäuses von 15° bis 90° beträgt.

Der Winkel α beträgt vorteilhafterweise von 30° bis 70°, bevorzugt von 35° bis 55° und insbesondere von 42° bis 47°.

In einer vorteilhaften Ausgestaltung der Erfindung ist die Steckeraufnahme oberhalb der Unterseite des Gehäuses und oberhalb der Klebebefestigung, insbesondere lotrecht zum Substrat über der Klebebefestigung angeordnet. Dies hat den besonderen Vorteil, dass Kräfte, die beim Einstecken des Steckers in die Steckeraufnahme auftreten, größtenteils lotrecht auf das Substrat einwirken. Das Substrat oder seine Unterlage sind weitestgehend druckstabil. Dadurch wird eine Krafteinwirkung auf die Verbindungsstelle zwischen Kontaktfuß und elektrisch leitfähiger Struktur sowie auf die elektrisch leitfähige Struktur selbst im Wesentlichen vermieden.

In einer alternativen Ausgestaltung der Erfindung beträgt der Winkel zwischen der Steckrichtung der Steckeraufnahme und der Unterseite des Gehäuses etwa 45°. Dies hat den besonderen Vorteil, dass Kräfte die beim Einstecken des Steckers in die Steckeraufnahme auftreten, mit einer großen Kraftkomponente lotrecht auf das Substrat einwirken. Dadurch wird eine Krafteinwirkung auf die Lötstellen oder Verbindungsstellen der Kontaktfüße und der elektrisch leitfähigen Strukturen und auf die elektrisch leitfähige Struktur selbst verringert und im Falle eines Winkels von 45° etwa halbiert.

Das Gehäuse und/oder der Stecker enthalten bevorzugt ein Polymer, besonders bevorzugt Polybutylenterephthalat, Polyamide, Polycarbonat, Polyurethane, Polybutylen, Polypropylen, Polyethylen, Polyethylenterephthalat, Polyvinylchlorid, Polystyrol, Acrylnitril-Butadien-Styrol, Ethylenvinylacetat, Ethylenvinylalkohol, Polyimide, Polyester, Polyketone, Polyetheretherketone und/oder Polymethylmethacrylat, Acrylester-Styrol-Acrylnitril sowie Gemische, Blockpolymere und Copolymere davon. Das Polymer kann einen Anteil Glasfasern, Glaskugeln, Mineralien oder andere Füllstoffe enthalten, bevorzugt einen Anteil von 9% bis 51% und besonders bevorzugt von 9% bis 11 %. Das Gehäuse kann einteilig oder mehrteilig ausgestaltet sein.

In einer vorteilhaften Ausgestaltung des erfindungsgemäßen Anschlusselements weist das Gehäuse mindestens eine Strebe zwischen Unterseite und Steckeraufnahme auf, bevorzugt genau eine Strebe. Die Strebe hat im Vergleich zu einem Vollmaterial den Vorteil einer Gewichtsersparnis bei ausreichend hoher Stabilität. Des Weiteren erlaubt die Strebe das einfache Greifen des Gehäuses durch einen automatischen Positionierarm und eine einfache und präzise Ausrichtung auf dem Substrat.

Die erfindungsgemäße Klebebefestigung enthält vorteilhafterweise einen starren oder elastischen Kleber, bevorzugt einen Acrlyatkleber, einen Silikonkleber oder einen thermisch aushärtbaren Kleber. Eine alternative Klebebefestigung enthält vorteilhafterweise Konstruktionsklebebänder, bevorzugt thermisch aushärtbare Klebefolien. Eine weitere alternative Klebebefestigung enthält Klebebänder mit einem elastischen Körper, besonders bevorzugt einen Körper aus Acrylatschaumstoff. Der elastische Körper weist bevorzugt doppelseitige Klebeflächen auf.

Der erfindungsgemäße elektrische Leiter enthält bevorzugt Kupfer, Eisen, Aluminium, Stahl, insbesondere Federstahl, und Legierungen davon, besonders bevorzugt Chrom-Nickel-Legierungen, Kupfer-Eisen-Legierungen, Messing oder Bronze. Der erfindungsgemäße elektrische Leiter kann mit einem weiteren Metall oder einer Metalllegierung beschichtet sein. Der erfindungsgemäße elektrische Leiter ist bevorzugt versilbert, vergoldet, verzinnt, verzinkt oder vernickelt.

Die elektrisch leitenden Strukturen auf dem Substrat sind typischerweise sehr dünn und werden durch geringe mechanische Kräfte, insbesondere Scherkräfte, beschädigt. In einer vorteilhaften Ausgestaltung der Erfindung ist mindestens ein Bereich des elektrischen Leiters elastisch ausgeführt, beispielsweise durch eine Verjüngung oder schleifenförmige Form. Der elektrische Leiter ist dadurch geeignet, mechanische Kräfte und insbesondere die Kraftkomponente in Steckrichtung des Steckers und parallel zum Substrat aufzunehmen. Derartige Kräfte treten beim Einstecken eines Steckers in die Steckeraufnahme auf. Durch eine elastische Ausgestaltung der elektrischen Leiter wird die Krafteinwirkung auf die Kontaktstellen zwischen Kontaktfuß und elektrisch leitender Strukturen entlastet. Dadurch wird eine Beschädigung der Kontaktstelle oder ein Ablösen der elektrisch leitenden Struktur vom Substrat vermieden. Des Weiteren können die elastischen Bereiche Wärmedehnungs-Differenzen, beispielsweise bei einer Wärmedehnung eines starren Substrats, ausgleichen.

In einer vorteilhaften Ausgestaltung sind die erfindungsgemäßen Kontaktfüße in einer Flucht mit der Projektion der Steckrichtung der Steckeraufnahme auf das Substrat angeordnet. Bevorzugt verlaufen die elektrischen Leiter außerhalb des Gehäuses ebenfalls in der Projektionsrichtung. Die Kontaktfüße sind beispielsweise bezüglich der Projektionsrichtung in einer Reihe, nebeneinander oder parallel versetzt angeordnet. Dies hat den besonderen Vorteil, dass Kräfte, die beim Einstecken des Steckers in die Steckeraufnahme auftreten, durch die elastischen Bereiche der elektrischen Leiter ausgeglichen werden. Dadurch werden Scherkräfte zwischen Kontaktfuß und elektrisch leitfähiger Struktur sowie zwischen elektrisch leitender Struktur und Substrat verringert.

Die Kontaktfläche der Kontaktfüße kann in Größe und Form an die Gegebenheiten des Einzelfalls angepasst werden und weit variieren. Bevorzugt beträgt die Kontaktfläche eines Kontaktfußes von 1 mm x 1 mm bis 10 mm x 10 mm und besonders bevorzugt von 2 mm x 2 mm bis 5 mm x 5 mm. Die Kontaktfüße können beispielsweise runde, rechteckige oder vieleckige Grundflächen aufweisen.

In einer vorteilhaften Ausgestaltung der Erfindung ist der Kontaktfuß mit der elektrisch leitenden Struktur durch mindestens eine Klemmverbindung verbunden.

Die Klemmverbindung wird bevorzugt durch einen Berührkontakt zwischen dem Kontaktfuß und der elektrisch leitfähigen Struktur gebildet. Dazu ist der elektrische Leiter derart geformt, dass der Kontaktfuß bei nicht eingebautem Anschlusselement in einer Ebene unterhalb der Unterseite des Gehäuses angeordnet ist. Beim Aufsetzen des Gehäuses auf das Substrat werden die Kontaktfüße mit den elektrischen Leitern vom Substrat weg nach oben gebogen und dadurch vorgespannt. Die Kontaktfüße pressen mit einer durch die Verbiegung der elektrischen Leiter entstandene Kraft nach unten auf die elektrisch leitfähigen Strukturen Die Vorspannung wird durch die Klebebefestigung des Gehäuses mit dem Substrat dauerhaft aufrecht erhalten. Dadurch werden Kontaktfüße und elektrisch leitfähige Strukturen dauerhaft elektrisch kontaktiert.

Die Klemmverbindung enthält alternativ mindestens eine Niete pro Kontaktfuß. Die Klemmverbindung beziehungsweise Nietverbindung ist besonders vorteilhaft bei Substraten mit einer Polymerfolie. Die Polymerfolie lässt sich einfach durchbohren oder durchstanzen. Durch die so entstandene Öffnung lässt sich besonders einfach eine Niete in das Substrat einbringen. Die Niete enthält bevorzugt ein Metall und besonders bevorzugt Kupfer.

In einer alternativen Ausgestaltung kann der Kontaktfuß mit einem elektrisch leitfähigen Kleber auf die elektrisch leitende Struktur geklebt werden.

In einer weiteren alternativen Ausgestaltung der Erfindung ist der Kontaktfuß durch Lotmasse mit der elektrisch leitenden Struktur verbunden. Diese Art der Verbindung ist besonders vorteilhaft bei elektrisch leitenden Strukturen, die auf ein Glassubstrat oder Keramiksubstrat aufgebracht sind, da im Gegensatz zum Nietverfahren das Substrat nicht durchbrochen werden muss.

Die Kontaktfüße weisen vorteilhafterweise einen Abstand von 0,5 mm bis 30 mm auf. Die Kontaktfüße und elektrisch leitenden Strukturen können zusätzlich elektrisch isoliert werden, beispielsweise durch einen elektrisch isolierenden Lack. Die Kontaktfüße weisen im Falle einer gelöteten Verbindung vorteilhafterweise einen Abstand von mindestens 9 mm voneinander auf, bevorzugt von mindestens 14 mm und besonders bevorzugt von 14 mm bis 30 mm. Wie Untersuchungen der Erfinder ergaben, findet durch Spannungsunterschiede und Erwärmung, beispielsweise bei Heizstrukturen und in Gegenwart von elektrolytisch wirkenden Medien vermehrt eine Elektrokorrosion der elektrisch leitenden Strukturen und der Lotmasse statt. Elektrolytisch wirkende Medien enthalten beispielsweise ein Gemisch aus Verschmutzungen in Verbindung mit Kondenswasser, wie es sich üblicherweise an der Innenseite von Fahrzeugverglasungen bildet. Ein Mindestabstand zweier benachbarter Kontaktfüße von mindestens 9 mm ist besonders vorteilhaft, da eine Elektrokorrosion unter den Anforderungsbedingungen der Kraftfahrzeugtechnik ausreichend vermieden wird.

Die erfindungsgemäße Steckeraufnahme weist bevorzugt eine Federzunge mit einer Auswölbung oder Aussparung auf. Die Steckeraufnahme kann über eine passgerecht ausgebildete Aussparung beziehungsweise Auswölbung am Stecker mit diesem verrastet werden. Dies hat den besonderen Vorteil, dass Stecker und Steckeraufnahme fest miteinander verbunden und vor unbeabsichtigter Trennung geschützt sind.

In einer vorteilhaften Ausgestaltung einer erfindungsgemäßen Anschlussanordnung enthält das Substrat ein Polymer oder eine Polymerfolie. Das erfindungsgemäße Polymer enthält bevorzugt Polyethylenenterephtalat (PETP), Polyvinylbutyral (PVB), Polyurethan (PU), Polyvinylchlorid (PVC), Polyimid (PI), Polypropylen (PP), Polyethylen (PE), Polyphenylensulfid (PPS), Polyaryletherketone (PAEK), Polyethylenimin (PEI), Polysulfon (PSU), Polyethylennaphthalat (PEN), Polybutylenterephthalat (PBT), Polyethylenterephthalat (PET), Polyamid (PA), Polycarbonat (PC), Cyclo-Olefin-Copolymere (COC), Polyoxymethylen (POM), Acrylnitril-Butadien-Styrol (ABS), Gemische oder Schichtverbindungen davon. Besonders geeignet sind flammhemmend ausgerüstete Polymere. Die Polymerfolie weist bevorzugt eine Dicke von 5 µm bis 700 µm auf, bevorzugt von 8 µm bis 200 µm und insbesondere von 20 µm bis 150 µm. Die Polymerfolie kann bevorzugt ein transparentes Polymer oder eine Aussparung in einem Durchsichtbereich zum Beispiel einer Kamera enthalten.

Das Merkmal "transparent" bezieht sich im Rahmen der Erfindung auf die optische Transparenz im Wellenlängenbereich von 200 nm bis 2000 nm, bevorzugt 400 nm bis 1300 nm. Bei einem transparenten Substrat beträgt die Transmission im Wellenlängenbereich von 400 nm bis 1300 nm bevorzugt mehr als 70 %.

Die Polymerfolie ist bevorzugt mit einer Scheibe oder einem anderen starren oder flexiblen Trägersubstrat verklebt. Dies ist besonders vorteilhaft wenn die Polymerfolie als Heizfolie oder Antennenstruktur verwendet wird. Die Polymerfolie enthält bevorzugt einen Klebstoff, besonders bevorzugt Acrylatklebstoffe, Methylmethacrylatklebstoffe, Cyanacrylatklebstoffe, Polyepoxide, Silikonklebstoffe und/oder silanvernetzende Polymerklebstoffe sowie Gemische davon. Die Polymerfolie enthält bevorzugt eine selbstklebende Folie.

In einer alternativen Ausgestaltung der erfindungsgemäßen Anschlussanordnung enthält das Substrat eine Scheibe, insbesondere eine transparente Scheibe. Die Scheibe enthält bevorzugt Glas, Keramiken und/oder Polymere, bevorzugt Flachglas, Floatglas, Quarzglas, Borosilikatglas, Kalk-Natron-Glas, Polymethylmethacrylat, Polycarbonat und/oder Gemische davon. Die Dicke der Scheibe beträgt bevorzugt von 0,5 mm bis 20 mm und besonders bevorzugt von 1,6 mm bis 2,6 mm. Die Scheibe umfasst bevorzugt Einscheibensicherheitsglas (ESG) oder Verbundscheibensicherheitsglas (VSG).

Das Substrat weist mindestens zwei elektrisch leitfähige Strukturen auf. Die elektrisch leitfähigen Strukturen können miteinander elektrisch verbunden sein, bevorzugt über einen ohmschen Widerstand, kapazitiv oder induktiv. Die elektrisch leitfähigen Strukturen können beispielsweise die zwei Enden eines Heizdrahtes oder einer Alarmschleife sein. Für eine bessere Kontaktierung können die elektrisch leitfähigen Strukturen im Bereich der Verbindung mit dem Kontaktfuß verbreitert, verdickt oder mit anderen Materialien beschichtet sein, beispielsweise mit einem Korrosionsschutz. Dies hat den besonderen Vorteil, dass die elektrische Verbindung besonders dauerhaft, stabil und korrosionsfest ist.

Die elektrisch leitfähige Struktur enthält vorteilhafterweise Drähte oder Schichten eines Metalls, einer Metallverbindung, einer Metalllegierung oder eines elektrisch leitfähigen Polymers. In einer bevorzugten Ausgestaltung besteht die elektrisch leitfähige Struktur aus einem Metall oder einer Metalllegierung. Besonders geeignete Metalle sind Kupfer, Aluminium, Silber, Zinn, Gold, Eisen, Wolfram, Chrom oder Nickel. Besonders geeignete Metallverbindungen sind Metalloxide und Metallsulfide, wie Titanoxid (TiO₂), Chromoxid, Zinksulfid, Fluor-dotiertes Zinndioxid (F:SnO₂) und Zinn-dotiertes Indiumoxid (ITO). Besonders geeignete Metalllegierungen sind Legierungen aus Kupfer-Aluminium und Kupfer-Zink. Geeignete elektrisch leitfähige Polymere sind Polyanilin oder Polyethylendioxythiophen. Die Metalle, Metallverbindungen und Metalllegierungen können mit den gängigen Techniken wie chemical vapor deposition (CVD) oder physical vapor deposition (PVD), wie Kathodenzerstäubung (Sputtern), aufgebracht werden. Die elektrisch leitfähigen Strukturen können vollflächig aufgebracht und anschließend partiell entfernt werden, beispielsweise mittels Photolithographie. Alternativ können die elektrisch leitfähigen Strukturen gedruckt oder aus Folien aufkaschiert werden. Die Dicke der elektrisch leitfähigen Struktur beträgt beispielsweise 0,001 µm bis 200 µm und bevorzugt 0,1 µm bis 50 µm.

Die erfindungsgemäße elektrisch leitfähige Struktur enthält bevorzugt Silber, besonders bevorzugt Silberpartikel und Glasfritten. Die Silberpartikel und Glasfritten werden aufgedruckt und anschließend eingebrannt. Eine derartige elektrisch leitfähige Struktur weist bevorzugt eine Schichtdicke von 8 µm bis 15 µm, besonders bevorzugt von 10 µm bis 12 µm auf.

Die elektrisch leitfähige Struktur kann teilweise und außerhalb der Kontaktstelle zum Kontaktfuß eine Deckschicht aufweisen, bevorzugt eine Folie aus einem oder mehreren elektrisch isolierenden Polymeren oder einen elektrisch isolierenden Lack. Die Deckschicht enthält bevorzugt PVB, EVA, PET und/oder Gemische davon. Die Deckschicht ist bevorzugt überstehend angeordnet, so dass die Polymerfolie und die elektrisch leitende Struktur mithilfe der Deckschicht auf einer Scheibenoberfläche auflaminiert werden.

Der Kontaktfuß weist bevorzugt eine Aussparung oder Auswölbung zur Aufnahme von Lotmasse auf. Die Aussparung kann auch eine Öffnung oder ein Loch sein. In der Aussparung kann vor dem Lötvorgang Lotmasse und Flussmittel angeordnet werden. Dies ermöglicht eine prozesstechnisch einfache Verlötung mit der elektrisch leitfähigen Struktur, da keine Lotmasse zusätzlich zugeführt werden muss. Ein Depot an Lotmasse kann bereits während der Herstellung des Anschlusselements am Kontaktfuß angeordnet werden.

Die erfindungsgemäße Lotmasse enthält bevorzugt Zinn, Wismut, Indium, Zink, Kupfer, Silber, Blei oder Zusammensetzungen davon. Der Anteil an Zinn in der erfindungsgemäßen Lotzusammensetzung beträgt bevorzugt von 3 Gew.-% bis 99,5 Gew.-%, besonders bevorzugt von 10 Gew.-% bis 95,5 Gew.-%, ganz besonders bevorzugt von 15 Gew.-% bis 60 Gew.-%. Der Anteil an Wismut, Indium, Zink, Kupfer, Silber oder Zusammensetzungen davon beträgt bevorzugt von 0,5 Gew.-% bis 97 Gew.-% und besonders bevorzugt 10 Gew.-% bis 67 Gew.-%, wobei der Anteil an Zinn, Wismut, Indium, Zink, Kupfer oder Silber 0 Gew.-% betragen kann. Die erfindungsgemäße Lotzusammensetzung kann Nickel, Germanium, Aluminium oder Phosphor mit einem Anteil von 0 Gew.-% bis 5 Gew.-% enthalten. Die erfindungsgemäße Lotzusammensetzung enthält ganz besonders bevorzugt Bi57Sn42Ag1, Bi59Sn40Ag1, In97Ag3, Sn95,5Ag3,8Cu0,7, Bi67In33, Bi33In50Sn17, Sn77,2In20Ag2,8, Sn95Ag4Cu1, Sn99Cu1, Sn96,5Ag3,5 oder Gemische davon. Die erfindungsgemäße Lotmasse ist bevorzugt bleifrei und enthält kein Blei oder lediglich herstellungsbedingte Beimengungen von Blei. Die erfindungsgemäße Schichtdicke des Lots ist bevorzugt < 7.0 x 10⁻⁴ m, besonders bevorzugt < 3.0 x 10⁻⁴ m und insbesondere < 0.5 x 10⁻⁴ m.

In einer vorteilhaften Ausgestaltung weist die Kontaktfläche eines erfindungsgemäßen Kontaktfußes Abstandshalter auf. Die Kontaktfläche des Kontaktfußes ist die dem Substrat zugewandte Unterseite des Kontaktfußes. Über die Kontaktfläche erfolgt die elektrische Leitungsverbindung zur elektrisch leitfähigen Struktur auf dem Substrat. Die Abstandshalter führen zur Ausbildung einer definierten und gleichförmigen Lotdicke während des Lötvorgangs und weisen bevorzugt eine Höhe von 0,1 x 10⁻⁴ m bis 7 x 10⁻⁴ m auf.

In einer vorteilhaften Ausgestaltung der Erfindung sind Steckeraufnahme und Stecker derart ausgestaltet, dass sie nur in einer Montagerichtung ineinandergreifen. Dies ermöglicht eine einfache und verpolungssichere Montage.

Die erfindungsgemäßen Steckkontakte können Steckstifte, Steckzungen oder Steckhülsen sein, wobei der erfindungsgemäße Stecker die passenden Gegenstücke aufweist. Der Steckkontakt, der elektrische Leiter und der Kontaktfuß sind bevorzugt als Bereiche eines einteiligen Bauelements ausgestaltet.

Ein weiterer Aspekt der Erfindung umfasst ein Verfahren zur Herstellung einer erfindungsgemäßen Anschlussanordnung, wobei mindestens:
a) das Gehäuse und das Substrat mit der Klebebefestigung verbunden werden,
b) mindestens zwei Kontaktfüße mit den elektrisch leitfähigen Strukturen auf dem Substrat elektrisch leitend verbunden werden und
c) ein Stecker in die Steckeraufnahme gesteckt wird.

In einer vorteilhaften Ausführungsform des erfindungsgemäßen Verfahrens werden die Kontaktfüße durch Löten, Schweißen, Kleben oder Klemmen, bevorzugt durch Nieten, mit der elektrisch leitenden Struktur auf dem Substrat verbunden.

Das Löten erfolgt bevorzugt durch Stempellöten, Thermodenlöten, Kolbenlöten, besonders bevorzugt Laserlöten, Heißluftlöten, Induktionslöten, Widerstandslöten und/oder mit Ultraschall.

Die Erfindung umfasst des Weiteren die Verwendung einer erfindungsgemäßen Anschlussanordnung mit einem Anschlusselement zur elektrischen Kontaktierung von elektrisch leitfähigen Strukturen und insbesondere von Heizleitern, Alarmschleifen, Sensoren und Antennen, auf Polymerfolien und/oder Scheiben, insbesondere in oder an Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und/oder Glasdach.

Es versteht sich, dass die verschiedenen Ausgestaltungen einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1 eine perspektivische Darstellung einer erfindungsgemäß ausgebildeten Anschlussanordnung,
Figur 2 eine Seitenansicht eines erfindungsgemäß ausgebildeten Anschlusselements,
Figur 3 eine schematische Darstellung eines erfindungsgemäß ausgebildeten Anschlusselements in einer Ansicht von oben,
Figur 4 eine perspektivische Darstellung eines erfindungsgemäß ausgebildeten Anschlusselements,
Figur 5 eine weitere perspektivische Darstellung eines erfindungsgemäß ausgebildeten Anschlusselements in einer Ansicht auf die Unterseite,
Figur 6 eine weitere perspektivische Darstellung eines erfindungsgemäß ausgebildeten Anschlusselements in einer Ansicht auf die Vorderseite,
Figur 7 eine Seitenansicht einer erfindungsgemäß ausgebildeten Anschlussanordnung,
Figur 8 eine Seitenansicht Darstellung einer alternativen, erfindungsgemäß ausgebildeten Anschlussanordnung,
Figur 9 eine perspektivische Darstellung eines alternativen erfindungsgemäß ausgebildeten Anschlusselements,
Figur 10 ein Flussdiagramm eines Ausführungsbeispiels des erfindungsgemäßen Verfahrens und
Figur 11 eine schematische Darstellung einer Anschlussanordnung nach dem Stand der Technik.

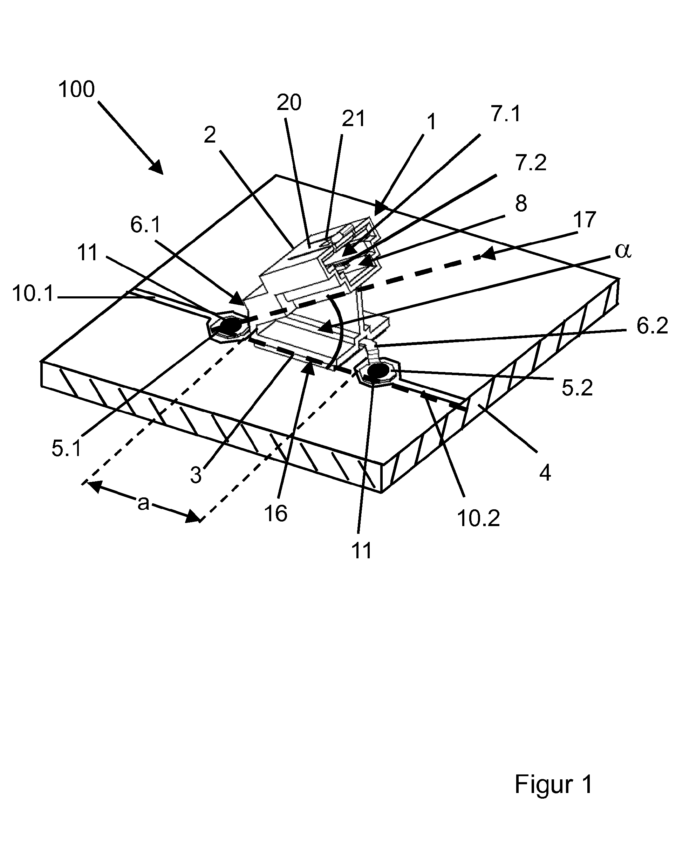

Figur 1 zeigt eine schematische Darstellung einer mit dem Bezugszeichen 100 bezeichneten, erfindungsgemäß ausgebildeten Anschlussanordnung. Das erfindungsgemäße Anschlusselement 1 umfasst ein Gehäuse 2, dass durch eine Klebebefestigung 3 mit einem Substrat 4 verbunden ist.

Das Substrat 4 ist in diesem Beispiel eine transparente Scheibe aus 3 mm dickem, thermisch vorgespanntem Einscheibensicherheitsglas aus Natron-Kalk-Glas. Das Substrat 4 weist eine Breite von 150 cm und eine Höhe von 80 cm auf, wobei in Figur 1 nur ein Ausschnitt dargestellt ist. Auf dem Substrat ist eine elektrisch leitende Struktur 10.1, 10.2 in Form einer Heizleiterschleife aufgedruckt. Von der elektrisch leitenden Struktur 10.1, 10.2 sind nur die Enden und Anschlussstellen dargestellt. Die elektrisch leitende Struktur 10.1, 10.2 enthält Silberpartikel und Glasfritten, die aufgedruckt und eingebrannt wurden.

Das Gehäuse hat beispielsweise eine Grundfläche von 12 mm x 12 mm und eine Höhe von 15 mm. Das Gehäuse enthält beispielsweise Polybutylenterephthalat mit einem 10%-igen Anteil an Glasfasern (PBT-GF10) und wurde durch ein Spritzgußverfahren hergestellt.

Die Klebebefestigung 3 enthält beispielsweise ein doppelseitiges Klebeband mit einem beidseitig klebenden Acrylat-Schaumstoff. Der Acrylat-Schaumstoff ist auf einer Seite flächig mit der Unterseite 16 des Gehäuses 2 und auf der gegenüberliegenden Seite flächig mit dem Substrat 4 verklebt.

Das Gehäuse 2 enthält zwei elektrische Leiter 6.1, 6.2, die jeweils in Form eines Steckkontakts 7.1, 7.2 im Innern der Steckeraufnahme 8 enden. Die elektrischen Leiter 6.1, 6.2 sind aus dem Gehäuse 2 herausgeführt und münden in Kontaktfüße 5.1, 5.2. Die Kontaktfüße 5.1, 5.2 sind mit den elektrisch leitenden Strukturen 10.1, 10.2 auf dem Substrat 4 elektrisch leitend verbunden und beispielsweise verlötet.

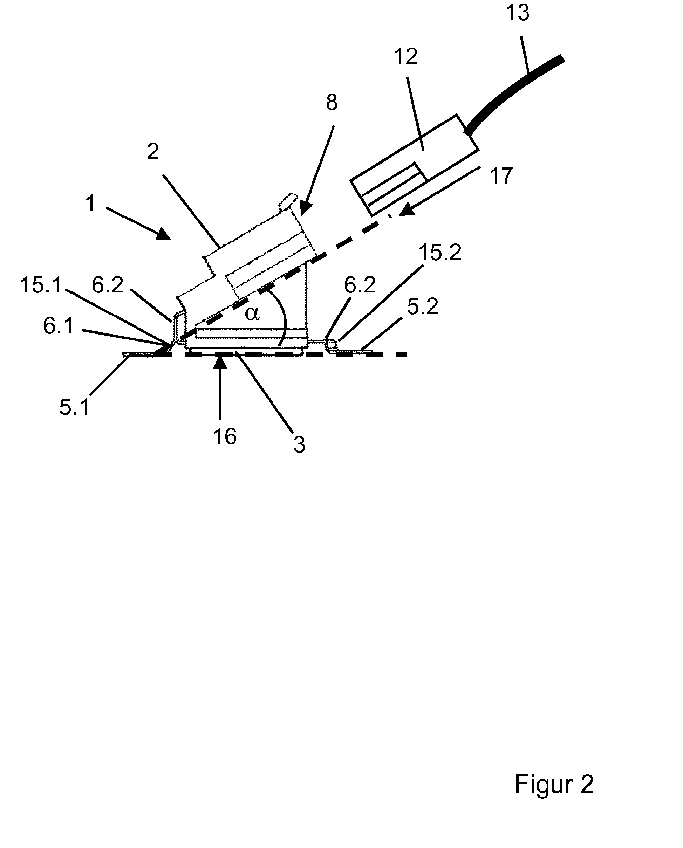

Figur 2 zeigt eine Seitenansicht des Anschlusselements 1. Die Steckrichtung 17 ist die Richtung in der der Stecker 12 in die Steckeraufnahme 8 eingesteckt wird. Die Steckeraufnahme 8 ist derart angeordnet, dass der Winkel α zwischen der Steckrichtung 17 der Steckeraufnahme 8 und der Unterseite 16 des Gehäuses 2 etwa 45° beträgt. Der Stecker 12 weist im Inneren zwei elektrische Leiter auf, die jeweils mit Steckkontakten 7.1, 7.2 verbunden sind. Die elektrische Verbindung mit dem Bordnetz erfolgt beispielsweise über eine zweiadrige Zuleitung 13.

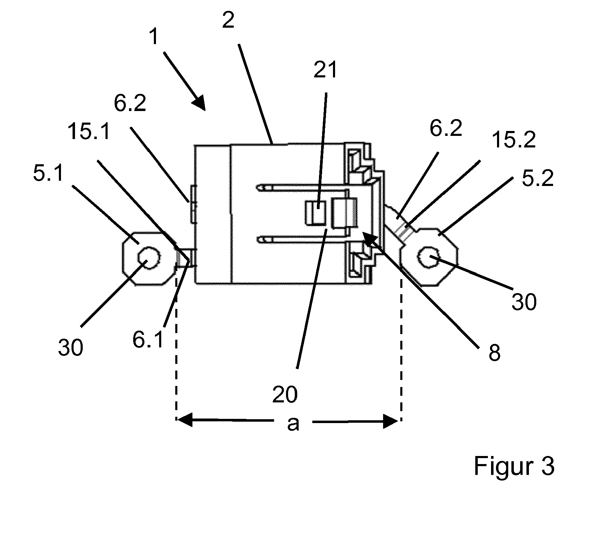

Figuren 3 bis 6 zeigen perspektivische Ansichten eines Ausgestaltungsbeispiels eines erfindungsgemäßen Anschlusselements 1.

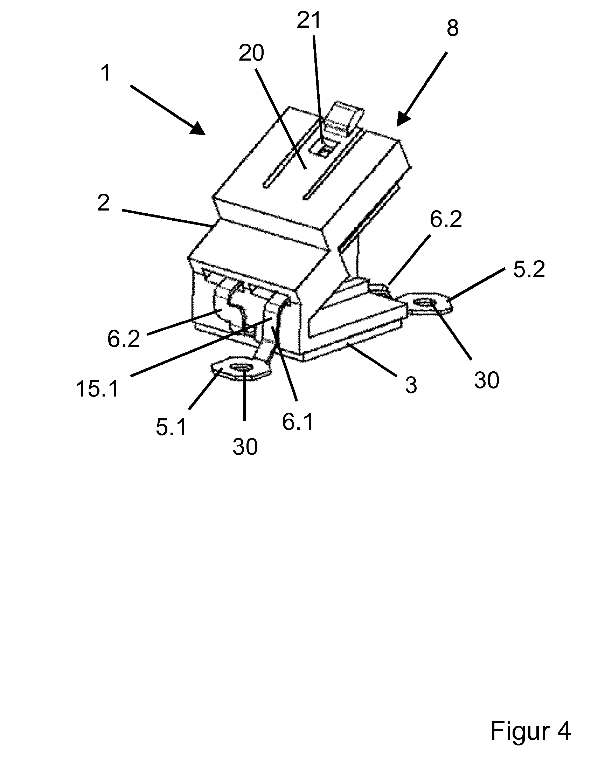

Figur 3 zeigt eine Ansicht des Anschlusselements 1 von oben und Figur 4 eine Ansicht auf die Austrittsseite der elektrischen Leiter 6.1, 6.2 des Gehäuses 2. Die Kontaktfüße 5.1, 5.2 sind in einer Flucht mit der Projektion der Steckrichtung 17 der Steckeraufnahme 8 auf das Substrat 4 angeordnet. Dies hat den besonderen Vorteil, dass die beim Einstecken des Steckers 12 in die Steckeraufnahme 8 auftretenden Kräfte zu einem großen Teil auf das Substrat 4 gelenkt werden. Dadurch wird die Kontaktstelle zwischen Kontaktfuß 5.1, 5.2 und elektrisch leitender Struktur 10.1, 10.2 sowie die Verbindung zwischen elektrisch leitender Struktur 10.1, 10.2 und Substrat 4 entlastet.

Das Gehäuse 2 enthält eine Federzunge 20 mit einer Aussparung 21. Die Federzunge 20 wird durch zwei parallele Einschnitte in das Polymer des Gehäuses 2 im Bereich der Steckeraufnahme 8 geformt. Der zwischen den Einschnitten verbliebene Bereich ist auf Grund des elastischen Polymermaterials des Gehäuses 2 elastisch und erfüllt die Funktion einer Federzunge 20. Die Federzunge 20 weist beispielsweise eine Aussparung 21 auf, die mit einer passenden Hervorhebung im Stecker 12 zu einer Verrastung des eingesteckten Steckers 12 führt.

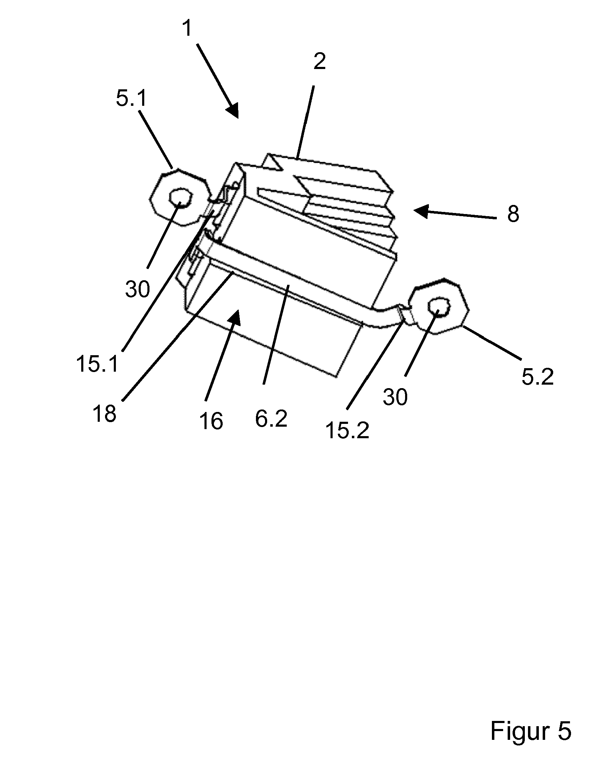

Figur 5 zeigt eine Ansicht auf die Unterseite 16 des Gehäuses 2. Zur besseren Deutlichkeit ist die Klebebefestigung 3 in Figur 5 nicht dargestellt. Im dargestellten Ausführungsbeispiel sind die Kontaktfüße 5.1, 5.2 auf verschiedenen Seiten des Gehäuses 2 angeordnet. Dazu ist der elektrische Leiter 6.2 in einer kanalartigen Aussparung 18 auf der Unterseite 16 des Gehäuse 2 angeordnet und von der Austrittsseite aus dem Gehäuse 2 auf die gegenüberliegende Seite geführt. Dies hat den besonderen Vorteil, dass bei einer kompakten Bauform des Anschlusselements 1 der Abstand a der Kontaktfüße 5.1 und 5.2 möglichst groß ist. Der minimale Abstand a zwischen beiden Kontaktfüßen 5.1, 5.2 beträgt beispielsweise 15 mm. Dieser minimale Abstand ist vorteilhaft um eine Elektrokorrosion der elektrisch leitenden Struktur 10.1, 10.2 und der Lötstelle zwischen Kontaktfuß 5.1, 5.2 und elektrisch leitender Struktur 10.1, 10.2 zu vermeiden.

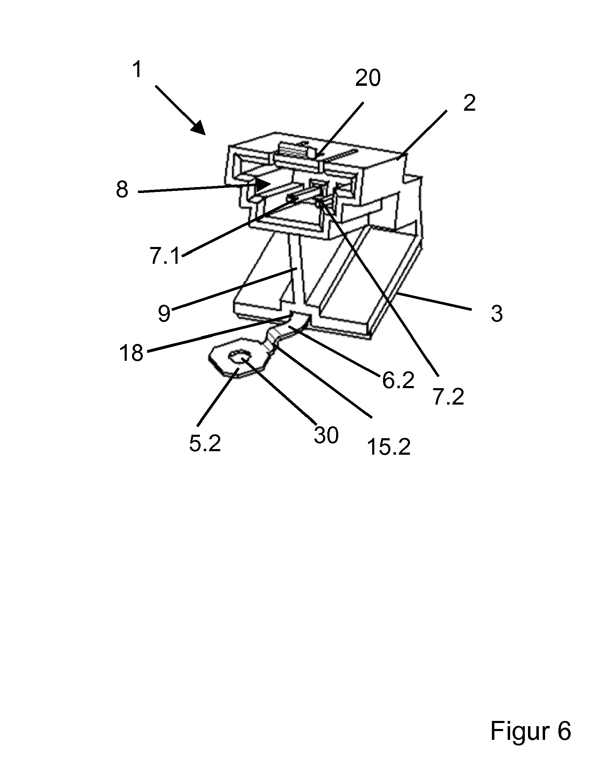

Figur 6 zeigt eine Ansicht auf die Steckeraufnahme 8 des erfindungsgemäßen Anschlusselements 1. Innerhalb der Steckeraufnahme 8 sind beispielsweise zwei stabförmige Steckkontakte 7.1, 7.2 nebeneinander angeordnet. Die Steckeraufnahme kann alternativ Steckzungen oder Steckhülsen aufweisen oder andersartig geformt sein. Die Steckkontakte 7.1, 7.2 können aus der Steckeraufnahme 8 herausragen. Die Steckeraufnahme 8 kann nur aus Steckkontakten 7.1, 7.2 bestehen und keine Führung durch Gehäuseteile aufweisen.

Die Steckeraufnahme 8 weist eine abgestufte Form auf, die mit einer passenden Ausgestaltung eines Steckers 12 eine geometrisch eindeutige, verpolungssichere Montage erlaubt.

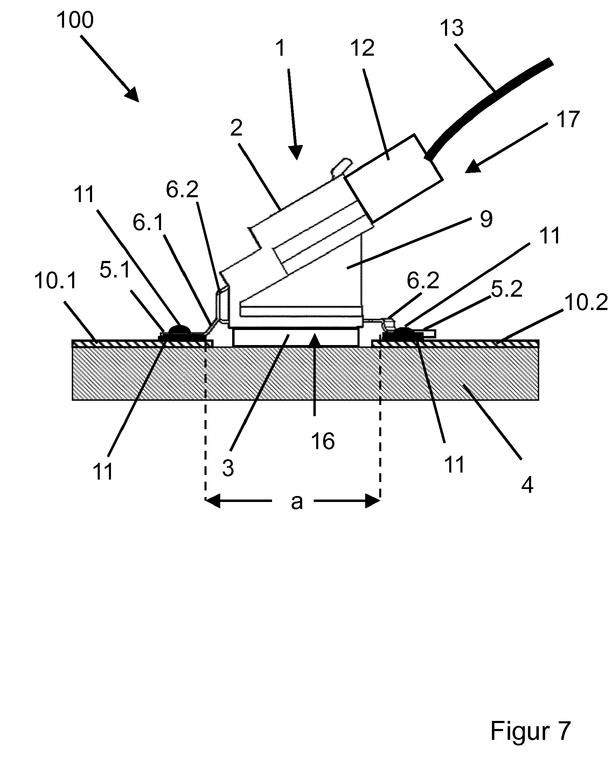

Figur 7 zeigt eine Seitenansicht einer erfindungsgemäß ausgestalteten Anschlussanordnung 100. Das Substrat umfasst beispielsweise eine transparente Scheibe aus Glas, wie sie bereits unter Figur 1 beschrieben wurde.

Die Kontaktfüße 5.1, 5.2 sind über Lotmasse 11 mit elektrisch leitenden Strukturen 10.1, 10.2 auf dem Substrat 4 verbunden. Die Kontaktfüße 5.1, 5.2 wurden bei einer Temperatur von 200 °C und einer Behandlungsdauer von 2 Sekunden auf der elektrisch leitenden Struktur 10.1, 10.2 angelötet. Die Lotmasse 11 wurde bereits vor dem Lötvorgang und insbesondere während der Konfektionierung des Anschlusselements 1 in Aussparungen 30 der Kontaktfüße 5.1, 5.2 angeordnet. Ein Teil der Lotmasse 11 ist während des Lötvorgangs durch die Aussparung 30 auf die Oberseite getreten. Dies ermöglicht eine optische Kontrolle des Lötvorgangs und der Qualität der Lötstelle auf der Unterseite des Kontaktfußes 5.1, 5.2. Oberseite bedeutet hier die dem Substrat 4 abgewandte Seite des Kontaktfußes 5.1, 5.2. Unterseite des Kontaktfußes 5.1, 5.2 bedeutet hier die dem Substrat 4 und der elektrisch leitenden Struktur 10.1, 10.2 zugewandten Seite.

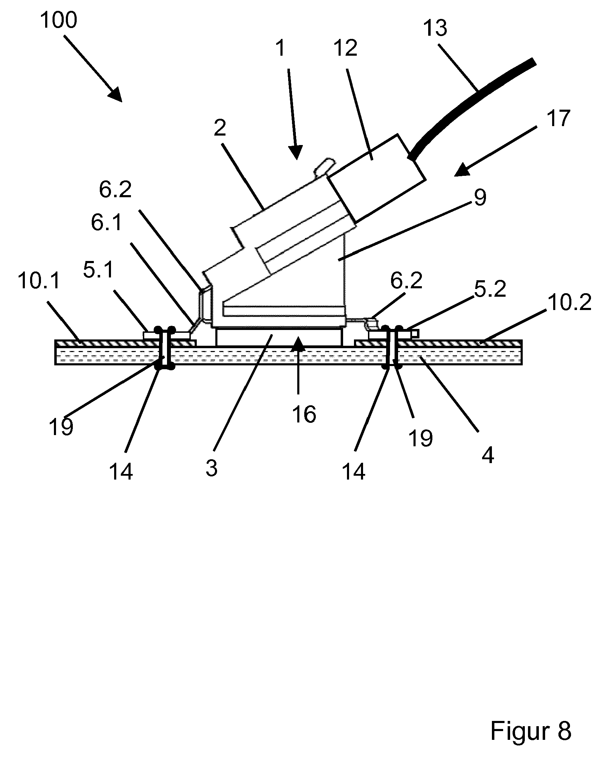

Figur 8 zeigt eine Seitenansicht auf eine alternative, erfindungsgemäß ausgebildete Anschlussanordnung 100. Das Substrat 4 enthält in diesem Beispiels eine 300 µm dicke Polymerfolie, die beispielsweise eine oder mehrere Lagen Polyester enthält. Auf der Polymerfolie ist eine elektrisch leitende Struktur 10.1, 10.2 angeordnet. Die elektrisch leitende Struktur 10.1, 10.2 enthält beispielsweise eine 15 µm dicke Messingschicht und ist in Form eines schleifenförmigen Heizleiters ausgebildet.

Die Kontaktfüße 5.1, 5.2 sind durch eine Klemmverbindung 14 und beispielsweise durch eine Niete mit der elektrisch leitenden Struktur 10.1, 10.2 verbunden. Dazu weist das Substrat 4 im Bereich der elektrisch leitenden Strukturen 10.1, 10.2 jeweils eine Durchführung 19 auf. Des Weiteren weist jeder Kontaktfuß 5.1, 5.2 eine Aussparung 30 auf. Die Durchführung 19 im Substrat 4 und die Aussparung 30 im Kontaktfuß 5.1, 5.2 sind übereinander angeordnet. Die Niete 14 greift durch die Durchführung 19 im Substrat 4 und die Aussparung 30 im Kontaktfuß 5.1, 5.2 und presst den Kontaktfuß 5.1, 5.2 und die elektrisch leitende Struktur 10.1, 10.2 dauerhaft und elektrisch leitend zusammen.

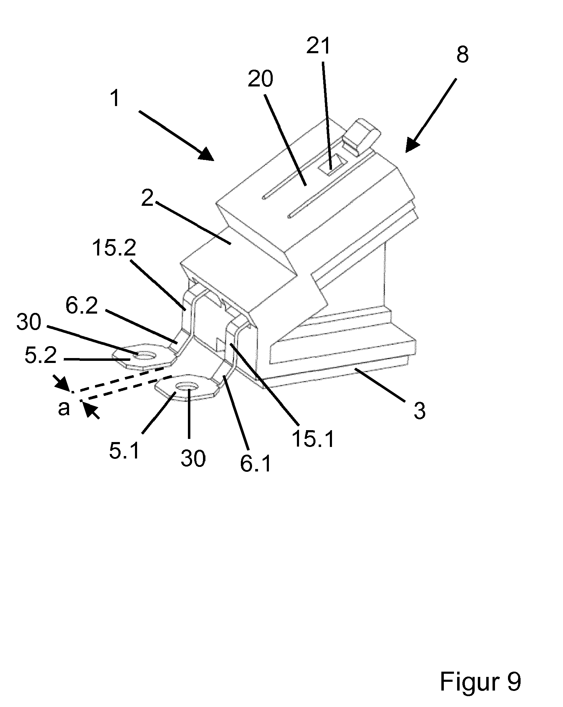

Figur 9 zeigt eine perspektivische Darstellung eines alternativen erfindungsgemäß ausgebildeten Anschlusselements 1. Im Unterschied zu den Ausgestaltungsbeispielen aus den Figuren 1 bis 8 sind die Kontaktfüße 5.1, 5.2 auf der selben Seite des Gehäuses 2 und beispielsweise auf der Austrittsseite der elektrischen Leiter 6.1, 6.2 aus dem Gehäuse 2 angeordnet. Dies hat den Vorteil einer besonders kompakten Bauform des Anschlusselements 1. Die Kontaktfüße 5.1, 5.2 werden bevorzugt mit einem Substrat vernietet. Der Abstand a der Kontaktfüße 5.1 und 5.2 beträgt hier beispielsweise 2 mm.

Dieser Abstand ist vorteilhaft für eine ausreichende elektrische Isolation und praktische Handhabbarkeit bei den Spannungen und Einsatzbedingungen der Kraftfahrzeugtechnik.

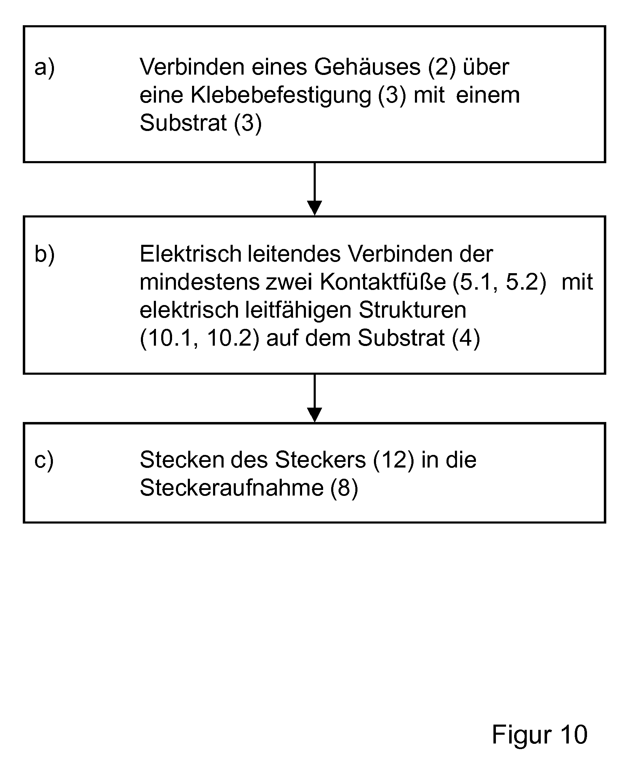

Figur 10 zeigt ein Flussdiagramm eines Ausführungsbeispiels des erfindungsgemäßen Verfahrens.

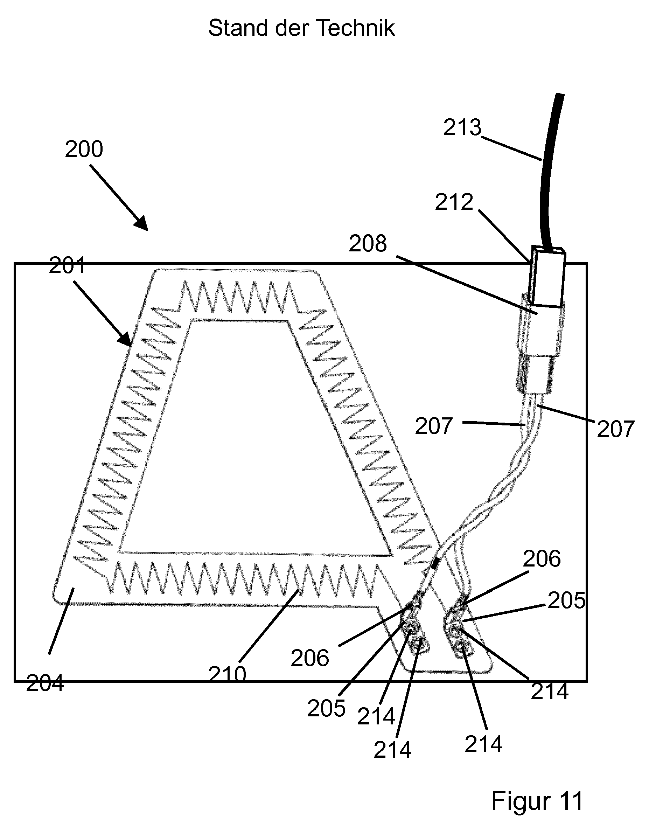

Figur 11 zeigt eine schematische Darstellung einer Anschlussanordnung 200 nach dem Stand der Technik zur elektrischen Kontaktierung einer Heizfolie 201. Das Substrat ist eine Polymerfolie 204, auf der eine elektrisch leitfähige Struktur 210 als Heizleiterschleife angeordnet ist. An den Enden der elektrisch leitfähigen Struktur 210 ist jeweils ein abgewinkelter Metallbügel 205 angeordnet. Der Metallbügel 205 ist mit jeweils zwei Nieten 214 mit der Polymerfolie 204 verbunden. Der orthogonal zur Polymerfolie 204 angeordnete Bereich des Metallbügels 205 dient als Flachsteckeranschluss. Der Flachsteckeranschluss ist mit einer Kraftfahrzeug-Flachsteckerhülse 206 verbunden. Die Flachsteckerhülse 206 ist mit einem Kabel 207 elektrisch leitend verbunden, beispielsweise gecrimpt. Zwei Kabel 207 münden in eine Steckerkupplung 208. Die Steckerkupplung 208 ist mit einem Stecker 212 und einer zweiadrigen Zuleitung 213 verbunden.

Die Montage der Anschlussanordnung 200 nach dem Stand der Technik erfolgt in mehreren Schritten: Zunächst werden die Metallbügel 205 auf die Polymerfolie 204 genietet. In einem weiteren Schritt werden die zwei Flachsteckerhülsen 206 mit den Metallbügeln 205 verbunden. Die zwei Flachsteckerhülsen 206 sind Bestandteile eines vorkonfektionierten Adapterkabels mit zwei Kabeln 207 und einer Steckerkupplung 208. In einem weiteren Schritt wird die Steckerkupplung 208 mit einem Stecker 212 verbunden. Die Steckerkupplung 208 und die Kabel 207 werden in einem weiteren Schritt an einem hier nicht dargestellten Kunststoffhalter, beispielsweise dem Halter einer Kamera oder eines Regenssensors befestigt. Dies ist notwendig, um eine Zugbelastung über die Kabel 207 auf die Metallbügel 205 und die Polymerfolie 204 zu vermeiden. Auf Grund der an losen Kabeln befestigten Steckelemente müssen die gesteckten Verbindungen mit zwei Händen geführt und gesteckt werden. Die Arbeiten sind wegen der Kleinheit der Teile nur schwer mit Schutzhandschuhen durchführbar, wie dies unter Sicherheitsaspekten gewünscht wäre.

Die vorliegende Erfindung weist mehrere Vorteile im Vergleich zu Anschlussanordnungen nach dem Stand der Technik 200 auf. Die elektrisch leitenden Strukturen 10.1, 10.2 und die Kontaktstelle zum Kontaktfuß 5.1, 5.2 werden durch angreifende mechanische Kräfte und insbesondere Scherkräfte leicht beschädigt. Erfindungsgemäß ist das Gehäuse 2 des Anschlusselements 1 über eine Klebebefestigung 3 mit dem Substrat 4 verbunden. Die Klebebefestigung 3 kann elastisch sein und auf das Gehäuse 2 einwirkende Kräfte aufnehmen. Die Klebebefestigung 3 kann alternativ starr ausgebildet sein und Kräfte auf das Substrat 4 weiterleiten. Beides entlastet die elektrische Leitungsverbindung zwischen Kontaktfuß 5.1, 5.2 und elektrisch leitfähiger Struktur 10.1, 10.2, was zu einer geringeren Ausfallquote der Anschlussanordnung 100 während der Herstellung und der Verwendung führt.

Die erfindungsgemäße Anschlussanordnung 100 hat weitere prozesstechnische Vorteile. So sind weniger Arbeitsschritte notwendig als bei Anschlussanordnungen nach dem Stand der Technik 200. Das Einstecken des Steckers 12 am Montageort kann einhändig und mit Handschuhen erfolgen. Dies verkürzt die Montagezeit und erhöht die Arbeitssicherheit für den Monteur.

Das Gehäuse 2 und die daran befindlichen Kontaktfüße 5.1, 5.2 sind durch die Klebebefestigung 3 mit dem Substrat 3 verrutschungssicher verbunden. Die anschließende Verbindung zwischen Kontaktfuß 5.1, 5.2 und elektrisch leitfähiger Struktur 10.1, 10.2 kann präzise und ohne weitere Justage durchgeführt werden. Dies vereinfacht den Herstellungsprozess und erhöht den Produktionsdurchsatz.

Diese und weitere Vorteile waren für den Fachmann unerwartet und überraschend.

### Bezugszeichen

- 1: Anschlusselement
- 2: Gehäuse
- 3: Klebebefestigung
- 4: Substrat
- 5.1,5.2: Kontaktfuß
- 6.1,6.2: elektrische Leiter
- 7.1,7.2: Steckkontakt
- 8: Steckeraufnahme
- 9: Strebe
- 10.1, 10.2: elektrisch leitfähige Struktur
- 11: Lotmasse
- 12: Stecker
- 13: Zuleitung
- 14: Klemmverbindung, Niete
- 15.1, 15.2: elastischer Bereich
- 16: Unterseite des Gehäuses 2
- 17: Steckrichtung der Steckeraufnahme 8
- 18: Aussparung auf der Unterseite 16 des Gehäuses 2
- 19: Durchführung im Substrat 4
- 20: Federzunge
- 21: Aussparung in der Federzunge 21
- 30: Aussparung im Kontaktfuß 5.1, 5.2
- 100: Anschlussanordnung

- 200: Anschlussanordnung nach dem Stand der Technik
- 201: Heizfolie
- 204: Polymerfolie
- 205: Metallbügel
- 206: Kraftfahrzeug-Flachsteckerhülse
- 207: Kabel
- 208: Steckerkupplung
- 210: elektrisch leitfähige Struktur
- 212: Stecker
- 213: Zuleitung
- 214: Niete

- a: Abstand
- α: Winkel

## Patentansprüche

1. Anschlussanordnung (100), mindestens umfassend:
- ein Substrat (4) mit mindesten zwei elektrisch leitfähigen Strukturen (10.1, 10.2),
- ein Gehäuse (2), das auf der Unterseite (16) mit einer Klebebefestigung (3) mit dem Substrat (4) verbunden ist, wobei das Gehäuse (2) eine Steckeraufnahme (8) mit mindestens zwei Steckkontakten (7.1, 7.2) aufweist, wobei die Steckkontakte (7.1, 7.2) über elektrische Leiter (6.1, 6.2) mit mindestens zwei Kontaktfüßen (5.1, 5.2) verbunden sind und die Kontaktfüße (5.1, 5.2) mit den elektrisch leitfähigen Strukturen (10.1, 10.2) elektrisch leitend verbunden sind, **dadurch gekennzeichnet, dass** der Winkel (α) zwischen der Steckrichtung (17) der Steckeraufnahme (8) und der Unterseite (16) des Gehäuses (2) von 15° bis 90° beträgt.

2. Anschlussanordnung (100) nach Anspruch 1, wobei der Winkel (α) von 30° bis 70° und bevorzugt von 35° bis 55° beträgt.

3. Anschlussanordnung (100) nach Anspruch 1 oder 2, wobei das Substrat (4) ein Polymer, bevorzugt eine Polymer-Folie mit einer Dicke von 5 µm bis 700 µm und bevorzugt Polyethylenenterephtalat (PETP), Polyvinylbutyral (PVB), Polyurethan (PU), Polyvinylchlorid (PVC), Polyimid (PI), Polypropylen (PP), Polyethylen (PE), Polyphenylensulfid (PPS), Polyaryletherketone (PAEK), Polyethylenimin (PEI), Polysulfon (PSU), Polyethylennaphthalat (PEN), Polybutylenterephthalat (PBT), Polyethylenterephthalat (PET), Polyamid (PA), Polycarbonat (PC), Cyclo-Olefin-Copolymere (COC), Polyoxymethylen (POM), Acrylnitril-Butadien-Styrol (ABS), Gemischen oder Schichtverbindungen davon enthält.

4. Anschlussanordnung (100) nach Anspruch 1 oder 2, wobei das Substrat (4) Glas und/oder Keramik, bevorzugt eine transparente Scheibe mit einer Dicke von 0,5 mm bis 20 mm und bevorzugt Flachglas, Floatglas, Quarzglas, Borosilikatglas, Kalk-Natron-Glas, und/oder Gemische davon enthält.

5. Anschlussanordnung (100) nach einem der Ansprüche 1 bis 4, wobei die elektrisch leitfähige Struktur (10.1, 10.2) ein aufgedampftes, aufgedrucktes oder aufgeklebtes Metall, eine Metallverbindung, eine Metalllegierung oder ein elektrisch leitfähiges Polymer enthält.

6. Anschlussanordnung (100) nach einem der Ansprüche 1 bis 5, wobei der Kontaktfuß (5.1, 5.2) mit der elektrisch leitfähigen Struktur (10.1, 10.2) durch Lotmasse (11), einen elektrisch leitfähigen Kleber oder eine Klemmverbindung (14), bevorzugt einen vorgespannten Berührkontakt oder eine Niete, verbunden ist.

7. Anschlussanordnung (100) nach einem der Ansprüche 1 bis 6, wobei die Kontaktfüße (5.1, 5.2) einen Abstand (a) von mindestens 9 mm, bevorzugt von mindestens 14 mm und besonders bevorzugt von 14 mm bis 30 mm aufweisen.

8. Anschlussanordnung (100) nach einem der Ansprüche 1 bis 7, wobei das Gehäuse (2) zwischen Unterseite (16) und Steckeraufnahme (8) eine Strebe (9) aufweist.

9. Anschlussanordnung (100) nach einem der Ansprüche 1 bis 8, wobei der elektrische Leiter (6.1, 6.2) in mindestens einem Bereich (15.1, 15.2) elastisch ist und mechanische Kräfte in Steckrichtung (17) und parallel zum Substrat (4) aufnehmbar sind.

10. Anschlussanordnung (100) nach einem der Ansprüche 1 bis 9, wobei der Kontaktfuß (5.1, 5.2) in einer Flucht mit der Steckrichtung (17) angeordnet ist.

11. Anschlussanordnung (100) nach einem der Ansprüche 1 bis 10, wobei der Kontaktfuß (5.1, 5.2) mindestens eine Aussparung (30) zur Aufnahme von Lotmasse (11) oder einer Klemmverbindung (14) aufweist.

12. Verfahren zur Herstellung einer Anschlussanordnung (100) nach einem der Ansprüche 1 bis 11, wobei mindestens:
a) das Gehäuse (2) und das Substrat (4) mit der Klebebefestigung (3) verbunden werden,
b) mindestens zwei Kontaktfüße (5.1, 5.2) mit den elektrisch leitfähigen Strukturen (10.1, 10.2) auf dem Substrat (4) elektrisch leitend verbunden werden und
c) ein Stecker (12) in die Steckeraufnahme (8) gesteckt wird.

13. Verfahren nach Anspruch 12, wobei der Kontaktfuß (5.1, 5.2) und die elektrisch leitfähige Struktur (10.1, 10.2) durch Löten, Schweißen, Kleben oder Klemmen, bevorzugt durch einen vorgespannten Berührkontakt oder durch Nieten, verbunden werden.

14. Verwendung einer Anschlussanordnung (100) nach einem der Ansprüche 1 bis 11 zur Kontaktierung von Heizleitern, Alarmschleifen und Antennen auf Polymerfolien und/oder Scheiben, bevorzugt in Fortbewegungsmitteln für den Verkehr auf dem Lande, in der Luft oder zu Wasser, insbesondere in Kraftfahrzeugen beispielsweise an Windschutzscheiben, Heckscheiben, Seitenscheiben und/oder Glasdächern.

## Claims

1. Connection arrangement (100), comprising at least:
- a substrate (4) having at least two electrically conductive structures (10.1, 10.2),
- a housing (2), which is bonded on its bottom (16) to the substrate (4) by an adhesive fastening (3), wherein the housing (2) has a plug receptacle (8) having at least two plug contacts (7.1, 7.2), wherein the plug contacts (7.1, 7.2) are connected via electrical conductors (6.1, 6.2) to at least two contact pads (5.1, 5.2), and the contact pads (5.1, 5.2) are electrically conductively connected to the electrically conductive structures (10.1, 10.2),
**characterized in that** the angle (α) between the plug-in direction (17) of the plug receptacle (8) and the bottom (16) of the housing (2) is from 15° to 90°.

2. Connection arrangement (100) according to claim 1, wherein the angle (α) is from 30° to 70° and preferably from 35° to 55°.

3. Connection arrangement (100) according to claim 1 or 2, wherein the substrate (4) contains a polymer, preferably a polymer film with a thickness from 5 µm to 700 µm and preferably polyethylenenterephtalat (PETP), polyvinyl butyral (PVB), polyurethane (PU), polyvinyl chloride (PVC), polyimide (PI), polypropylene (PP), polyethylene (PE), polyphenylene sulfide (PPS), polyaryletherketone (PAEK), polyethyleneimine (PEI), polysulfone (PSU), polyethylene naphthalate (PEN), polybutylene terephthalate (PBT), polyethylene terephthalate (PET), polyamide (PA), polycarbonate (PC), cyclic olefin copolymers (COCs), polyoxymethylene (POM), acrylonitrile butadiene styrene (ABS), mixtures or layered compounds thereof.

4. Connection arrangement (100) according to claim 1 or 2, wherein the substrate (4) contains glass and/or ceramic, preferably a transparent pane with a thickness from 0.5 mm to 20 mm and preferably flat glass, float glass, quartz glass, borosilicate glass, soda lime glass, and/or mixtures thereof.

5. Connection arrangement (100) according to one of claims 1 through 4, wherein the electrically conductive structure (10.1, 10.2) contains a vapor deposited, printed-on, or glued-on metal, a metal compound, a metal alloy, or an electrically conductive polymer.

6. Connection arrangement (100) according to one of claims 1 through 5, wherein the contact pad (5.1, 5.2) with the electrically conductive structure (10.1, 10.2) is connected by soldering compound (11), an electrically conductive adhesive, or a clamp connection (14), preferably a preloaded touching contact or a rivet.

7. Connection arrangement (100) according to one of claims 1 through 6, wherein the contact pads (5.1, 5.2) have a distance (a) between them of at least 9 mm, preferably of at least 14 mm, and particularly preferably of 14 mm to 30 mm.

8. Connection arrangement (100) according to one of claims 1 through 7, wherein the housing (2) has a strut (9) between its bottom (16) and the plug receptacle (8).

9. Connection arrangement (100) according to one of claims 1 through 8, wherein the electrical conductor (6.1, 6.2) is elastic in at least one region (15.1, 15.2) and mechanical forces are absorbable in the plug-in direction (17) and parallel to the substrate (4).

10. Connection arrangement (100) according to one of claims 1 through 9, wherein the contact pad (5.1, 5.2) is arranged in a line with the plug-in direction (17).

11. Connection arrangement (100) according to one of claims 1 through 10, wherein the contact pad (5.1, 5.2) has at least one recess (30) to accommodate soldering compound (11) or a clamp connection (14).

12. Method for producing a connection arrangement (100) according to one of claims 1 through 11, wherein at least:
a) the housing (2) and the substrate (4) are bonded by the adhesive fastening (3),
b) at least two contact pads (5.1, 5.2) are electrically conductively connected to the electrically conductive structures (10.1, 10.2) on the substrate (4), and
c) a plug (12) is plugged into the plug receptacle (8).

13. Method according to claim 12, wherein the contact pad (5.1, 5.2) and the electrically conductive structure (10.1, 10.2) are connected by soldering, welding, gluing, or clamping, preferably by a preloaded touching contact or by rivets.

14. Use of a connection arrangement (100) according to one of claims 1 through 11 for contacting heating conductors, alarm loops, and antennas on polymer films and/or panes, preferably in means of transportation for travel on land, in the air, or on water, in particular in motor vehicles, for example, on windshields, rear windows, side windows, and/or glass roofs.

## Revendications

1. Ensemble de raccordement (100), comprenant au moins:
- un substrat (4) avec au moins deux structures électriquement conductrices (10.1, 10.2),
- un boîtier (2), qui est reliée sur sa face inférieure (16) par une fixation adhésive (3) avec le substrat (4), où le boîtier (2) présente un support de prise (8) avec au moins deux contacts enfichables (7.1, 7.2), ou les contacts enfichables (7.1, 7.2) sont reliées par des conducteurs électriques (6.1, 6.2) avec au moins deux pieds de contact (5.1, 5.2) de façon électriquement conductrice et les pieds de contact (5.1, 5.2) sont connectés électriquement conductrice avec les structures conductrices (10.1, 10.2), **caractérisé en ce que** l'angle entre le sens d'enfichage (17), du support de prise (8) et la face inférieure (16) du boîtier (2) est de 15° à 90°.

2. Ensemble de raccordement (100) selon la revendication 1, où l'angle (α) est de 30° à 70° et de préférence de 35° à 55°.

3. Ensemble de raccordement (100) selon la revendication 1 ou 2, où le substrat (4) contient un polymère, de préférence un film de polymère d'une épaisseur de 5µm à 700µm, et de préférence du polytéréphtalate d'éthylène (PETP), du polybutyral vinylique (PVB), du polyuréthane (PU), du polychlorure de vinyle (PVC), des polyimides (PL), du polypropylène (PP), du polyéthylène (PE), du polysulfure de phénylène (PPS), des polyaryléthercétones (PAEK), des polyéthylènimines (PEI), de la polysulfone (PSU), du polynaphtalate d'éthylène (PEN), du téréphtalate de polybutylène (PBT), polytéréphtalate d'éthylène (PET), du polyamide (PA), du polycarbonate (PC), des copolymères cyclo-oléfine (COC), du polyoxyméthylène (POM), de l'acrylonitrile-butadiène-styrène (ABS), des mélanges ou des composés de couche de ceux-ci.

4. Ensemble de raccordement (100) selon la revendication 1 ou 2, où le substrat (4) contient du verre et/ou de la céramique, de préférence une vitre transparente d'une épaisseur de 0,5 mm à 20 mm et de préférence du verre plat, du verre flotté, du verre de quartz, du verre borosilicate, du verre sodocalcique et/ou leurs mélanges.

5. Ensemble de raccordement (100) selon l'une des revendications 1 à 4, où la structure conductrice (10.1, 10.2) contient un métal déposé en phase vapeur, imprimé ou collé, une connexion de métal, un alliage métallique ou un polymère électriquement conducteur.

6. Ensemble de raccordement (100) selon l'une des revendications 1 à 5, où le pied de contact (5.1, 5.2) est associé avec la structure électriquement conductrice (10.1, 10.2) par une masse de brasage (11), une colle électriquement conductrice ou un raccordement par serrage (14), de préférence un contact tactile préchargé ou un rivet.

7. Ensemble de raccordement (100) selon l'une des revendications 1 à 6, où les pieds de contact (5.1, 5.2) présentent un écart (a) d'au moins 14 mm, de préférence un écart d'au moins 9 mm et de façon particulièrement préférée de 14 mm à 30 mm.

8. Ensemble de raccordement (100) selon l'une des revendications 1 à 7, où le boîtier (2) présente un renfort (9) entre la face inférieure (16) et le support de prise (8).

9. Ensemble de raccordement (100) selon l'une des revendications 1 à 8, où le conducteur électrique (6.1, 6.2) est élastique dans au moins un domaine (15.1, 15.2) et des forces mécaniques peuvent être absorbées dans le sens d'enfichage (17) et parallèle au substrat (4).

10. Ensemble de raccordement (100) selon l'une des revendications 1 à 9, où l'élément de contact (5.1, 5.2) est disposé en alignement avec le sens d'enfichage (17).

11. Ensemble de raccordement (100) selon l'une des revendications 1 à 10, où l'élément de contact (5.1, 5.2) présente au moins une niche (30) pour accueillir la masse se brasage (11) ou le raccordement par serrage (14).

12. Procédé de fabrication d'un ensemble de connexion (100) selon l'une des revendications 1 à 11, où au moins:
a) le boîtier (2) et le substrat (4) sont reliés par la fixation adhésive (12)
b) au moins deux pieds de contact (5.1, 5.2) sont reliées électriquement au substrat (4) avec les structures conductrices (10.1, 10.2) et
c) une fiche (12) est enfichée dans le support de prise (8).

13. Procédé selon la revendication 12, où le pied de contact (5.1, 5.2) et la structure électriquement conductrice (10.1, 10.2) sont reliées par brasage, soudage, collage ou fixation, de préférence par un contact tactile préchargé ou par rivetage.

14. Utilisation d'un ensemble de connexion (100) selon l'une des revendications 1 à 11 pour la connexion de conducteurs de chauffage, des boucles d'alarmes et d'antennes sur des films polymères et/ou des vitres, de préférence dans des moyens de locomotion pour la circulation sur la terre, dans l'air ou dans l'eau, en particulier dans des véhicules automobiles, par exemple sur les pare-brises, les lunettes arrière, les vitres latérales et/ou les toits en verre.
